# FASCICULE DE BREVET EUROPEEN

(11) **EP 1 573 388 B1**
(45) Date de publication et mention de la délivrance du brevet: **26.04.2006**
(21) Numéro de dépôt: 03799537.0
(22) Date de dépôt: 04.12.2003
(51) Int. Cl.: G02F 1/1339, G02F 1/1362, G02F 1/1345, G02F 1/1333

(54) **PROCEDE DE FABRICATION DE CELLULES A CRISTAUX LIQUIDES SUR SUBSTRAT SILICIUM, ET CELLULES CORRESPONDANTES**
VERFAHREN ZUR HERSTELLUNG VON FLÜSSIGKRISTALLZELLEN AUF SILICIUMSUBSTRAT UND SOLCHE ZELLEN
METHOD OF PRODUCING LIQUID CRYSTAL CELLS ON A SILICON SUBSTRATE AND CORRESPONDING CELLS

(30) Priorité: 20.12.2002 FR 0216360
(43) Date de publication de la demande: 14.09.2005
(73) Titulaire: Thales, 92200 Neuilly Sur Seine (FR)
(72) Inventeur: LEBRUN, Hugues, Thales Intell. Property, F-94117 Arcueil (FR); ARFUSO, Saverio, Thales Intell. Property, F-94117 Arcueil (FR); LEHUREAU, Jean-Claude, Thales Intell. Property, F-94117 Arcueil (FR)
(74) Mandataire: Esselin, Sophie
(86) Numéro de dépôt international: PCT/EP2003/050944
(87) Numéro de publication internationale: WO 2004/057415

(56) Documents cités:
- US-A- 4 600 273
- US-A1- 2002 024 628
- US-A1- 2002 071 085
- PATENT ABSTRACTS OF JAPAN vol. 2000, no. 03, 30 mars 2000 (2000-03-30) -& JP 11 337953 A (TOSHIBA CORP), 10 décembre 1999 (1999-12-10)

## Description

La présente invention appartient au domaine de la fabrication de cellules à cristaux liquides, sur substrat silicium, selon une technologie généralement désignée par l'acronyme anglo-saxon LCOS (*Liquid Crystal On Silicon*). Elle concerne plus particulièrement une méthode de fabrication de telles cellules selon des procédés collectifs.

De manière connue, un procédé collectif de fabrication de cellules à cristaux liquides sur substrat silicium comprend l'obtention d'une plaquette silicium, sur laquelle a été formée une pluralité de circuits de matrice active, ces circuits étant disposés sur la plaquette selon un réseau sensiblement orthogonal.

Le procédé collectif comprend alors les étapes suivantes, bien connues de l'homme du métier :
- Formation sur un support transparent, généralement en verre, d'une pluralité de motifs ou circuits de contre-électrode en matériau conducteur et transparent, selon un réseau orthogonal ;
- Dépôt sur la plaquette de silicium et sur le support transparent, sur chaque circuit, d'une couche de matière organique, que l'on vient frotter, pour former les microstries qui permettront l'alignement des cristaux liquides;
- Formation d'un joint périphérique ou cadre de scellement, non totalement fermé, sur le pourtour de chaque matrice active;
- Assemblage du support transparent sur la plaquette de silicium l'un sur l'autre, chaque circuit de contre-électrode faisant face à un circuit de matrice active, et le cadre de scellement ménageant un espace entre les deux circuits;
- Prédécoupe de la plaquette de silicium sur 50 à 90% de l'épaisseur de la plaquette, par sciage dans l'eau depuis la face arrière, un joint étanche, par exemple un cordon de colle époxy, ayant été préalablement formé sur le pourtour de l'ensemble support-plaquette; et prédécoupe du support en verre, soit par sciage sur 50 à 95% de l'épaisseur, soit par un stylet formant des sillons (scribing).
- Séchage et séparation unitaire des cellules, par un moyen mécanique adapté tel qu'une guillotine, ou manuellement.
- Introduction des cristaux liquides dans chaque cellule, qui viennent remplir la cavité de chaque cellule par l'ouverture ménagée dans le cadre de scellement, puis bouchage hermétique de l'ouverture.

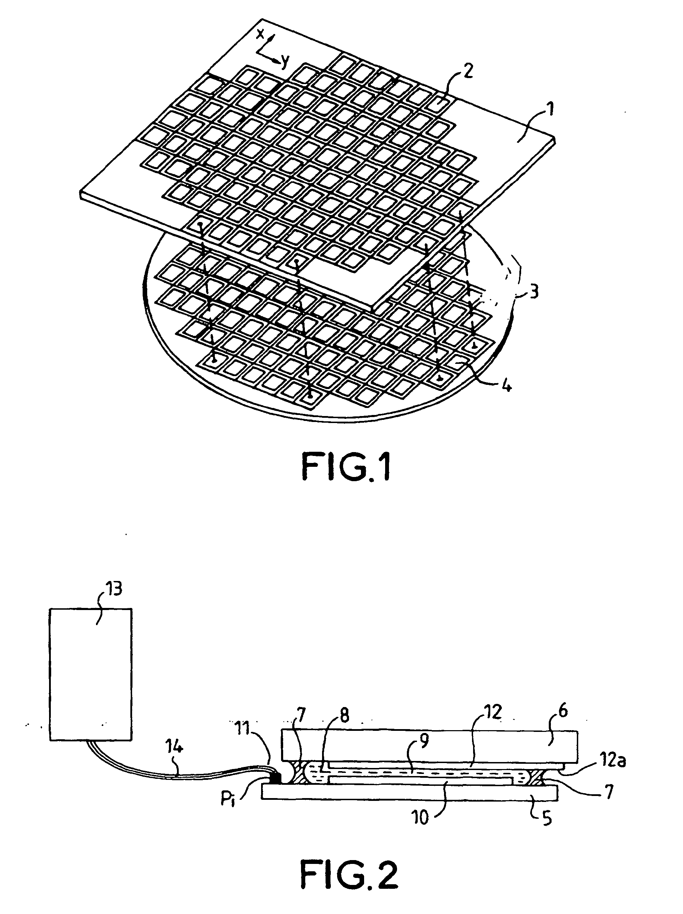

L'assemblage collectif des supports en silicium et en verre impose que les tailles respectives des substrats individuels soient les mêmes sur les deux supports. Sur la figure 1, on a représenté schématiquement la superposition d'un support en verre 1 portant un réseau orthogonal de circuits de contre-électrode 2, et une plaquette silicium 3 portant un réseau orthogonal de circuits 4 de matrice active. Les réseaux orthogonaux sont de même dimensions (ils ont le même pas en x et en y), en sorte que lorsque les deux supports 1 et 2 sont correctement alignés l'un par rapport à l'autre, chaque circuit de matrice active 4 se retrouve face à un circuit de contre-électrode 2. Les lignes de découpe sur chacun des supports correspondent aux lignes et colonnes du réseau. Les deux supports peuvent être décalés l'un par rapport à l'autre selon une direction x ou y, afin de dégager les plages de contact généralement prévues sur un bord périphérique des circuits de matrice active et des contre-électrodes.

Sur la figure 2, on a représenté en vue transversale une cellule à cristaux liquides obtenue selon un procédé collectif. Cette cellule est formée d'un substrat silicium 5, assemblé à un substrat en verre 6 au moyen d'un cadre de scellement 7, ces trois éléments formant une cavité 8 qui contient les cristaux liquides 9.

Le substrat silicium 5 comprend une zone active 10 et une zone périphérique comprenant une zone de connexion 11. La zone active 10 est située à l'intérieur de la zone délimitée par le cadre de scellement 7 et comprend la matrice d'éléments pixels. La zone de connexion 11 est située à l'extérieur du cadre de scellement et comprend des plages de contact Pi (*"contact pads"*).

Le substrat en verre 6 comprend un motif de contre-électrode 12, qui définit une fenêtre par laquelle la matrice d'éléments pixels est vue. Il est positionné par rapport au substrat silicium de façon à dégager la zone de connexion 11, de manière à permettre la connexion de la cellule à un dispositif de commande 13 d'un système de visualisation, par exemple au moyen d'un circuit imprimé flexible 14. On prévoit généralement que la contre-électrode 12 déborde du cadre, dans une zone 12a du substrat transparent 6 en débord par rapport au substrat silicium, permettant de connecter la contre-électrode à un dispositif de commande de la cellule, par exemple au moyen d'un circuit imprimé flexible.

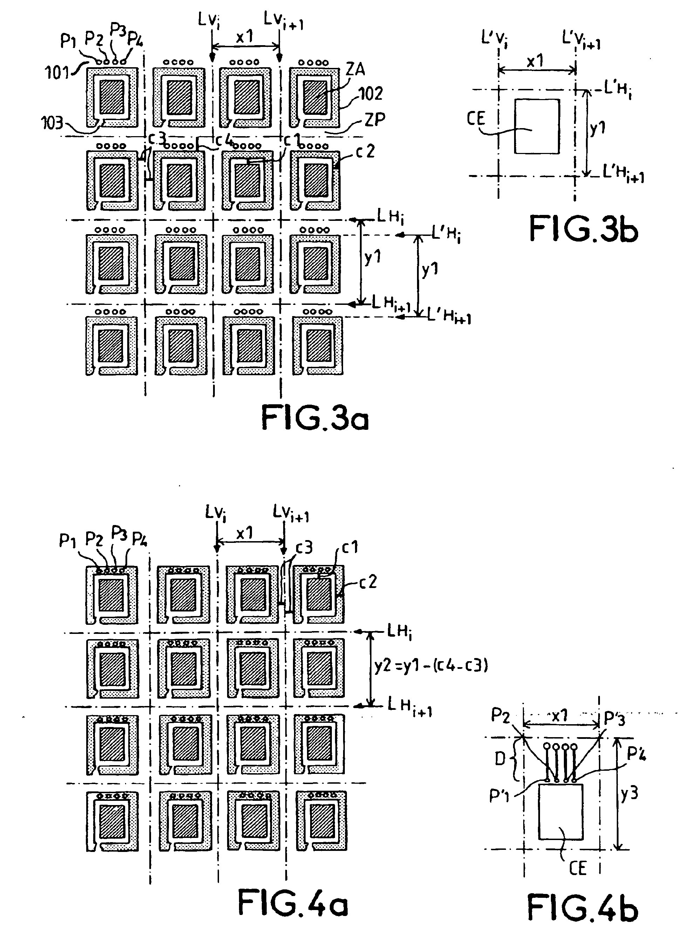

Chaque circuit de matrice active est formé dans une subdivision de la plaquette de silicium, que l'on appelle généralement "die" dans la littérature anglo-saxonne. Comme représenté sur la figure 3a, chaque subdivision est délimitée par deux lignes adjacentes Lvⱼ et Lvⱼ₊₁ de découpe verticale et deux lignes adjacentes LHᵢ et LHᵢ₊₁ de découpe horizontale. Ces lignes correspondent aux lignes et colonnes du réseau de placement des circuits de matrice active.

Chaque subdivision (ou substrat individuel, ou circuit de matrice active) comprend une zone active ZA, avec les éléments pixels, et une zone périphérique ZP, autour de la zone active, qui comprend des plages de contact, P₁, P₂, P₃, P₄. Ces plages de contact sont situées dans une même zone de connexion 101, dans l'exemple, sur le bord horizontal supérieur. Ces plages sont destinées à recevoir les signaux d'adressage de la matrice, fournis par un dispositif de commande externe 13 de la cellule, par exemple au moyen d'un circuit imprimé flexible 14 (figure 2).

Un cadre de scellement 102 est disposé autour de la zone active ZA. Ce cadre non totalement fermé permet l'assemblage avec un substrat portant la contre-électrode, et la formation d'une cavité entre les deux substrats, pour recevoir les cristaux liquides. De manière connue, après introduction des cristaux liquides, l'ouverture 103 ménagée dans le cadre est fermée.

Les règles de dessin élaborées pour tenir compte, notamment, des tolérances sur les équipements de fabrication utilisés (précisions, alignements), imposent certaines dimensions minimales. On connaît pour un type d'écran de visualisation donné, les dimensions du circuit de matrice active correspondant. Par exemple, pour des applications de type HDTV, la définition de la cellule est de 1920 pixels (horizontal) sur 1080 pixels (vertical). Avec une technologie sur silicium qui donne une surface pixel de 10x10 µm², on a une surface de zone active de cellule correspondante, de l'ordre de 207 mm². C'est la surface fonctionnelle du circuit de matrice active. Autour de cette zone, on a une zone non fonctionnelle, périphérique, dont les dimensions dépendent des règles de dessin, déterminées pour avoir une grande fiabilité de fabrication, en tenant compte des problèmes de tolérances d'alignement, d'épaisseur de dépôt de joint de colle (cadre de scellement) selon la technique employée (sérigraphie, seringue ou *"dispenser"*), d'épaisseur des découpes, et autres. Ces règles de dessin se traduisent par des cotes minimales à respecter, qui conditionnent le pas du réseau de placement des circuits sur la plaquette de silicium.

Plus précisément, et si on se reporte à la figure 3a, une première cote c1 définit la distance minimale entre les bords de la zone active ZA et le cadre de scellement 102 ; une deuxième cote c2 définit l'épaisseur minimale du cadre de scellement 102 ; une troisième cote c3 définit la distance minimale entre le cadre 102 et une ligne de découpe verticale Lvⱼ (colonne du réseau de placement) ou horizontale LHⱼ (ligne du réseau de placement) ; une quatrième cote c4 définit la largeur de débord minimal de la zone de connexion 101 par rapport au cadre de scellement 102.

Si on reprend l'exemple d'une cellule à cristaux liquides pour des applications de type HDTV, on a vu que la surface de zone active de cellule est de l'ordre de 207 mm², ce qui correspond à la part de surface fonctionnelle de la subdivision de silicium.

La surface non fonctionnelle de silicium, correspondant à la zone périphérique ZP, et qui est liée aux cotes c1 à c4, représente elle une surface de l'ordre de 151 mm², soit 42% de la surface totale de silicium, en prenant c1=c2=0,7mm, c3=0,5mm et c4=1mm.

Ainsi, la proportion des zones non fonctionnelles dans le silicium par rapport aux zones fonctionnelles est assez élevée.

Or le silicium est un matériau coûteux. Si on peut réduire la proportion de zones non fonctionnelles, au profit des zones fonctionnelles dans le silicium, on abaisse de façon significative le coût des cellules à cristaux liquides issues de cette technologie.

Un objet de l'invention est de réduire la proportion des zones non fonctionnelles des substrats silicium dans les cellules à cristaux liquides, afin d'obtenir une réduction du coût de fabrication de ces cellules.

L'idée à la base de l'invention est de déporter la zone de connexion du circuit de matrice active sur le substrat en verre. On peut alors se libérer de la contrainte liée au respect de la quatrième cote c4. On peut alors réduire la surface de silicium nécessaire pour chaque cellule.

Plus précisément, selon l'invention, on dispose le cadre de scellement sur chaque circuit de matrice active de la plaquette, de sorte qu'une portion du cadre recouvre les plots de contact. Le cadre comprend un joint et des éléments conducteurs disposés dans le joint. Ces éléments conducteurs assurent la continuité électrique des plages de contact sur la matrice avec des moyens de connexion correspondant réalisés sur le support transparent. Ces éléments conducteurs sont aussi des espaceurs (cales), qui garantissent l'espacement entre les deux substrats.

Telle que caractérisée, l'invention concerne donc un procédé de fabrication d'une pluralité de cellules à cristaux liquides individuelles, comprenant chacune un premier substrat comprenant une contre-électrode et un deuxième substrat de matrice active, assemblés par un cadre de scellement ménageant une cavité entre les deux substrats pour des cristaux liquides, les premiers substrats étant formés collectivement sur un support transparent, les deuxièmes substrats étant formés collectivement sur une plaquette de silicium, et comprenant des plages de contact. Selon l'invention,
- des moyens de connexion sont formés sur chaque premier substrat en regard desdites plages de contact des deuxièmes substrats ;
- les deuxièmes substrats sont découpés de la plaquette de silicium, le long de lignes de découpe correspondant au contour du cadre de scellement ;
- chacun desdits deuxièmes substrats découpés est reporté et assemblé sur le support transparent avec un premier substrat correspondant de telle sorte que le cadre de scellement est disposé entre chaque premier et deuxième substrats d'une cellule, de façon à recouvrir lesdites plages de contact, et une portion des moyens de connexion en regard, ledit cadre comprenant un joint en matériau isolant et des éléments conducteurs disposés dans ledit joint, en sorte d'assurer une continuité électrique entre chaque plage et un élément correspondant de la portion des moyens de connexion, et
- une étape ultérieure de séparation en cellules à cristaux liquides individuelles par découpe du support transparent est effectuée en sorte que la zone de chaque premier substrat comprenant les moyens de connexion soit en débord par rapport au deuxième substrat auquel il est assemblé.

On obtient ainsi une surface de silicium minimale, qui permet de gagner environ 10% de surface de silicium sur une plaquette. C'est de l'espace libéré pour la réalisation de circuits supplémentaires sur une plaquette de silicium. Par exemple, sur une plaquette sur laquelle on réalisait 15 rangées de 9 circuits de matrice active, soit 135 circuits, on va gagner une rangée de circuits, soit 9 circuits dans l'exemple.

L'invention concerne aussi une cellule à cristaux liquides, avec un substrat en verre portant la contre-électrode et un substrat silicium comprenant un circuit de matrice active. Selon l'invention, le deuxième substrat silicium a une découpe correspondant au contour du cadre de scellement. La cellule comprend des moyens de connexion du circuit de matrice active déportés sur le substrat en verre, et en débord par rapport au substrat silicium, et un cadre de scellement qui assemble les deux substrats recouvrant les plages de contact du substrat silicium et une portion des moyens de connexion déportés et comprenant un joint et des éléments conducteurs disposés dans le joint.

Le préambule de la cellule revendiquée est basé sur l'enseignement de la demande US-A-2002/071085.

D'autres avantages et caractéristiques de l'invention apparaîtront plus clairement à la lecture de la description qui suit, faite à titre indicatif et non limitatif de l'invention et en référence aux dessins annexés, dans lesquels :
- la figure 1 illustre le positionnement selon une méthode connue pour l'assemblage d'une plaquette de silicium avec un support transparent, pour former collectivement un lot de cellules à cristaux liquides ;
- la figure 2 représente schématiquement une cellule à cristaux liquides résultant de la méthode connue ;
- la figure 3a représente schématiquement un réseau de placement connu de circuits de matrice active sur une plaquette de silicium ;
- la figure 3b représente un carreau d'un réseau correspondant connu de circuits de contre-électrode sur un support transparent ;
- la figure 4a représente schématiquement un réseau de placement de circuits de matrice active sur une plaquette de silicium selon l'invention;
- la figure 4b représente un carreau d'un réseau correspondant de circuits de contre-électrode sur un support transparent ;
- la figure 5 représente en coupe transversale une cellule à cristaux liquides résultant ;
- la figure 6 représente schématiquement une autre variante de cellule à cristaux liquides selon l'invention, et
- les figures 7a à 7d illustrent différents modes de réalisation des éléments conducteurs selon l'invention.

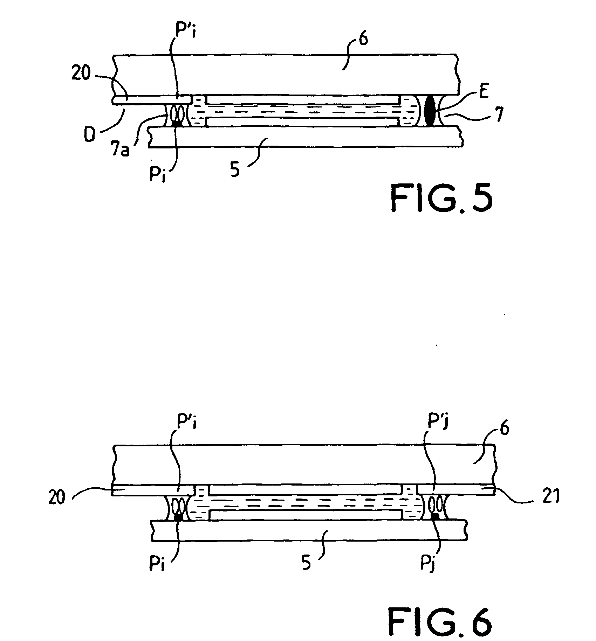

Une cellule à cristaux liquides obtenue en appliquant le principe de fabrication selon l'invention est illustrée sur la figure 5.

Comparée à une cellule de l'état de la technique comme représenté à la figure 2, la cellule à cristaux liquides comprend des moyens de connexion 20 du circuit de matrice active déportés sur le substrat transparent 6. Ces moyens de connexion déportés 20 sont disposés en débord par rapport au substrat silicium. Ce sont typiquement des pistes conductrices, par exemple des pistes en ITO (oxyde d'indium et d'étain), ou des pistes recouvertes d'un métal conducteur.

Le cadre de joint de scellement 7 est disposé de façon à recouvrir les plages de contact Pi du circuit de matrice active, sur le substrat silicium et une portion P'i en regard des moyens de connexion 20 déportés sur le substrat transparent 6. Le cadre de scellement est réalisé dans un matériau de joint, tel que du gel silicone par exemple. Des éléments conducteurs 7a sont disposés dans le joint. Différentes méthodes de réalisation de ces éléments conducteurs peuvent être utilisées, qui seront détaillées plus loin. Par ces éléments conducteurs 7a, la continuité électrique est assurée entre chaque plage de contact Pi du circuit de matrice active et un élément correspondant P'i des moyens de connexion déportés 20. Par ces éléments conducteurs 7a, l'espacement entre les deux substrats est aussi défini : ces éléments conducteurs sont aussi des espaceurs.

D'une manière générale, on peut noter que des espaceurs E sont généralement prévus sur tout le pourtour du cadre. Selon l'invention, dans les zones de connexion, ces espaceurs sont alors réalisés par les éléments conducteurs 7a. Ailleurs, on peut disposer les espaceurs habituellement utilisés, comme des billes ou des fibres de silice. Mais on peut aussi bien utiliser comme espaceurs E des éléments de même nature que les éléments conducteurs 7a.

En utilisant des moyens de connexion déportés sur le substrat transparent selon le principe de l'invention, on peut découper les substrats silicium selon des lignes de découpe qui suivent le contour du cadre, en respectant les règles de dessin. C'est ce qui est représenté sur les figures 4a et 4b. Les lignes de découpe horizontales LHᵢ et verticales Lvᵢ peuvent être disposées pour tenir compte seulement des cotes c1, c2 et c3. La cote c4 n'est plus appliquée, ce qui permet, dans l'exemple, de gagner (c4-c3), soit 0,3 mm dans l'exemple, sur chaque hauteur de circuit.

En d'autres termes, si on note x1 et y1 la distance séparant deux lignes de découpe adjacentes verticales et horizontales, dans le réseau de la figure 3a, avec un réseau suivant le principe de l'invention appliqué à la configuration représentée, la distance x1 entre deux lignes de découpe verticales adjacentes est inchangée (figure 4a), mais la distance entre deux lignes de découpe horizontales adjacentes devient y2=y1-(c4-c3).

En ce qui concerne le support transparent, et comme représenté sur la figure 4b, chaque substrat transparent individuel doit comporter, outre la contre-électrode CE, les moyens 20 de connexion déportés. Ces moyens sont typiquement des pistes conductrices (pistes en ITO, ou pistes recouvertes d'un métal) et comportent des plages P'₁, P'₂, P'₃, P'₄ correspondant aux plages P₁, P₂, P₃, P₄ sur le substrat silicium. Ce sont ces plages qui seront recouvertes par le cadre de scellement. Ces plages se prolongent par des lignes conductrices vers d'autres plages situées en bordure du substrat transparent, dans la zone D prévue pour être en débord par rapport au substrat silicium, après assemblage. Les moyens de connexion déportés 20 peuvent par exemple être réalisés pour permettre une connexion externe du type *"wire bonding",* ou une connexion par thermocollage d'un circuit imprimé flexible, avec un ruban de colle conductrice anisotrope (contenant des billes en Nickel par exemple) appliqué à chaud entre le substrat transparent et le circuit imprimé flexible.

La disposition des éléments conducteurs 7a dans le joint du cadre de scellement 7 (figure 5) est déterminée de manière à assurer la continuité électrique entre les plages de contact qui se correspondent sur les substrats, P1 et P'1 par exemple, mais sans créer de courts-circuits entre deux plots adjacents, P1 et P2 par exemple.

Ainsi, dans une cellule selon l'invention, les signaux de commande des circuits placés sur le substrat silicium transitent exclusivement par le substrat transparent, à travers les zones de contact en vis à vis, reliées par les éléments conducteurs du joint de scellement.

L'invention permet en outre de disposer des plages de contact éventuellement sur plusieurs bords, ce qui peut être intéressant pour la conception du circuit de matrice active lui-même, pour la disposition des lignes conductrices par rapport aux éléments actifs. On peut ainsi disposer des plages de contact Pi sur un bord, et des plots Pj sur un autre bord. C'est le cas de la cellule représentée sur la figure 6. Il faut alors prévoir des moyens de connexion déportés correspondant 21 sur le substrat transparent 6, en débord par rapport au substrat silicium.

Avec des moyens de connexion déportés et un cadre de scellement recouvrant les plages de contact du circuit de matrice active sur le substrat silicium, on peut réduire la zone non fonctionnelle du substrat silicium. De préférence, les lignes de découpe correspondent donc au contour du cadre de scellement, aux contraintes de dessin près (c3).

Comme on peut le voir sur les figures 5 et 6 et 4a et 4b, la surface du substrat silicium devient plus petite que la surface du substrat transparent sur lequel les moyens de connexion du circuit de matrice active ont été déportés. Les lignes de découpe des substrats silicium et transparent ne coïncident plus.

Le procédé de fabrication comprend donc une étape de découpe de la plaquette silicium en substrats individuels 5 de matrice active et le report et l'assemblage de chacun de ces substrats silicium sur un substrat transparent correspondant.

Avant le report et l'assemblage, une couche de polyimide est déposée puis frottée sur les circuits du substrat transparent et sur chacun des substrats silicium individuels, sur le circuit de matrice active, ce qui permettra l'alignement des cristaux liquides qui seront injectés, dans les microstries ainsi formées.

Après découpe des substrats silicium, et assemblage sur le support transparent, avec un substrat transparent correspondant, le support en verre peut être ensuite découpé selon les techniques habituelles. Le cristal liquide est introduit selon tout procédé connu, puis les ouvertures dans les cadres sont bouchées. On obtient les cellules à cristaux liquides individuelles. En pratique, on obtient une réduction de la surface silicium de chaque substrat de matrice active, qui permet de réaliser environ 10% de circuits en plus sur chaque plaquette. On réduit ainsi les coûts de fabrication des cellules à cristaux liquides.

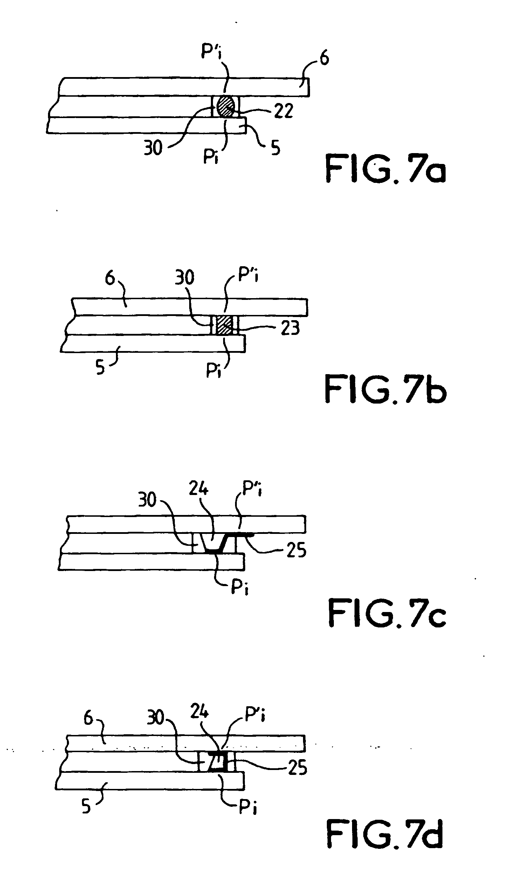

Sur les figures 7a à 7d, on a représenté différents modes de réalisation des éléments conducteurs 7a disposés dans le joint du cadre de scellement.

Dans un premier mode de réalisation représenté sur la figure 7a, ces éléments conducteurs sont des billes 22 conductrices. Ces billes peuvent être des billes en matériau isolant, recouvertes d'un matériau conducteur, par exemple de l'or, ou des billes en matériau conducteur. Elles sont disposées aux endroits nécessaires dans le joint, par injection au moyen d'une seringue (*"dispenser"*). Le diamètre des billes est de l'ordre généralement de 2 microns et plus. Les plages de contact sont espacées de l'ordre de 20 à 50 microns sur le substrat silicium.

Lorsque les deux substrats sont assemblés l'un à l'autre, le gel silicone, ou la colle qui forme le matériau du joint 30 est pressé, en sorte que la bille vient directement en contact de chaque côté sur les substrats.

Le diamètre des billes définit ainsi le gap entre les deux substrats assemblés, c'est à dire la taille de la cavité.

Pour des cellules à faible gap, inférieur à deux microns, l'utilisation de billes comme éléments conducteurs et comme espaceurs n'est plus adaptée.

Sur la figure 7b, on a représenté un autre mode de réalisation des éléments conducteurs du cadre de scellement. Dans cet exemple, les éléments conducteurs sont des plots 23 en matériau conducteur, par exemple de l'aluminium. Ces plots peuvent avoir toute hauteur voulue. En particulier, on sait faire de tels plots avec une hauteur de 2 microns et moins.

De préférence, on réalisera ces plots sur le substrat silicium, sur les plages de contact, par toute technique adaptée (photogravure). Le joint peut être déposé ensuite, sur le substrat silicium en recouvrant ces plots, ou sur le substrat transparent. Comme indiqué précédemment, lorsque les deux substrats sont assemblés l'un à l'autre, le gel silicone, ou la colle qui forme le matériau du joint, est pressé, en sorte que le plot conducteur vient directement en contact de chaque côté sur les substrats.

Un autre mode de réalisation est représenté sur les figures 7c et 7d, dans lequel on utilise un plot en résine 24, muni d'une couche conductrice 25, comme élément conducteur 7a.

Sur la figure 7c, ce plot en résine 24 est réalisé sur le substrat transparent, puis un dépôt d'une couche conductrice est réalisé, qui vient au moins recouvrir la face du plot qui doit venir en contact avec la plage Pᵢ sur le substrat silicium, et qui vient recouvrir une partie du substrat transparent, sur la plage correspondante P'i.

Sur la figure 7d, le plot en résine 24 est réalisé sur le substrat silicium, sur la plage de contact Pᵢ. Il est muni d'une couche de métal 25, qui assure la continuité électrique entre ses deux faces.

Là encore, et dans les deux variantes de réalisation du plot en résine, lorsque les deux substrats sont assemblés l'un à l'autre, le gel silicone, ou la colle qui forme le matériau du joint est pressé, en sorte que le plot en résine muni de sa couche conductrice vient directement en contact de chaque côté sur les substrats.

Dans tous les cas, les éléments conducteurs 7a qui assurent la continuité électrique entre les plages de contact du substrat silicium et les moyens de connexion déportés sur le substrat transparent, assurent aussi la fonction d'espaceurs : ils fixent le gap entre les deux substrats, et donc le gap de la cavité.

Dans les autres parties du cadre qui ne recouvrent pas de zones de connexion, on a aussi des espaceurs E (figure 5). Ces espaceurs peuvent être de tout type connu, comme des billes ou des fibres de silice. Ces espaceurs peuvent être conducteurs ou non, puisqu'ils ne sont pas sur des zones de connexion. On peut ainsi prévoir que ces espaceurs soient de même nature que les éléments conducteurs 7a du joint.

Enfin, on notera que chaque substrat transparent aura une forme adaptée après découpe, permettant la connexion de la contre-électrode selon toute technique connue.

## Revendications

1. Procédé de fabrication d'une pluralité de cellules à cristaux liquides individuelles, comprenant chacune un premier substrat (6) comprenant une contre-électrode et un deuxième substrat (5) de matrice active, assemblés par un cadre de scellement (7) ménageant une cavité (8) entre les deux substrats pour des cristaux liquides, les premiers substrats étant formés collectivement sur un support transparent, les deuxièmes substrats étant formés collectivement sur une plaquette de silicium, et comprenant des plages de contact (Pᵢ), **caractérisé en ce que**
- des moyens de connexion (20) sont formés sur chaque premier substrat (6) en regard desdites plages de contact (Pᵢ) des deuxièmes substrats;
- les deuxièmes substrats sont découpés de la plaquette de silicium, le long de lignes de découpe (Lvⱼ, LHᵢ) correspondant au contour du cadre de scellement (7) ;
- chacun desdits deuxièmes substrats découpés est reporté et assemblé sur le support transparent avec un premier substrat correspondant de telle sorte que le cadre de scellement (7) est disposé entre chaque premier et deuxième substrats d'une cellule, de façon à recouvrir lesdites plages de contact (Pᵢ), et une portion (P'ᵢ) des moyens de connexion en regard, ledit cadre comprenant un joint en matériau isolant et des éléments conducteurs (7a) disposés dans ledit joint, en sorte d'assurer une continuité électrique entre chaque plage (Pᵢ) et un élément correspondant de la portion (P'ᵢ) des moyens de connexion, et
- une étape ultérieure de séparation en cellules à cristaux liquides individuelles par découpe du support transparent est effectuée en sorte que la zone de chaque premier substrat comprenant les moyens de connexion soit en débord (D) par rapport au deuxième substrat auquel il est assemblé.

2. Procédé de fabrication selon la revendication 1, **caractérisé en ce qu'**il comprend une étape ultérieure de remplissage des cavités (8) par des cristaux liquides.

3. Procédé de fabrication selon la revendication 1 ou 2, **caractérisé en ce que** lesdits éléments conducteurs (7a) sont des billes conductrices (22).

4. Procédé de fabrication selon la revendication 1 ou 2, **caractérisé en ce que** lesdits éléments conducteurs (7a) sont des plots de résine (24), munis d'une couche conductrice (25).

5. Procédé de fabrication selon la revendication 1 ou 2, **caractérisé en ce que** lesdits éléments conducteurs (7a) sont des plots métalliques (23) réalisés sur le substrat silicium.

6. Procédé de fabrication selon l'une quelconque des revendications 1 à 5, **caractérisé en ce que** lesdits éléments conducteurs (7a) sont des espaceurs.

7. Procédé de fabrication selon la revendication 6, **caractérisé en ce que** d'autres éléments espaceurs (E) sont disposés dans le joint, lesdits éléments étant conducteurs ou non, et de même nature ou de nature différente desdits éléments conducteurs (7a).

8. Cellule à cristaux liquides comprenant un premier substrat (6) transparent comprenant une contre-électrode et un deuxième substrat silicium (5) comprenant un circuit de matrice active avec des plages de contact (Pᵢ), lesdits substrats étant assemblés par un cadre de scellement (7) ménageant une cavité (8) entre les deux substrats pour des cristaux liquides, de sorte que la cellule comprend des moyens de connexion (20) du circuit de matrice active déportés sur le premier substrat (6), et disposés (D) par rapport au deuxième substrat (5) **caractérisée en ce que** le deuxième substrat a une découpe (Lvⱼ, LHᵢ) correspondant au contour du cadre de scellement (7), et **en ce que** le cadre de scellement (7) est formé d'un joint qui recouvre lesdites plages de contact (Pᵢ) sur le deuxième substrat et une portion (P'ᵢ) desdits moyens de connexion en regard, et d'éléments conducteurs (7a) disposés dans le joint qui assurent la continuité électrique entre chacune desdites plages de contact et une portion correspondante des moyens de connexion.

9. Cellule selon la revendication 8, **caractérisée en ce que** lesdits éléments conducteurs (7a) sont des billes conductrices (22).

10. Cellule selon la revendication 8, **caractérisée en ce que** lesdits éléments conducteurs (7a) sont des plots de résine (24) muni d'une couche conductrice (25).

11. Cellule selon la revendication 8, **caractérisée en ce que** lesdits éléments conducteurs (7a) sont des plots métalliques (23).

12. Cellule selon l'une quelconque des revendications 8 à 11, **caractérisée en ce que** lesdits éléments conducteurs (7a) sont des espaceurs.

13. Cellule selon la revendication 12, **caractérisée en ce que** d'autres éléments espaceurs (E) sont disposés dans le joint, lesdits éléments étant conducteurs ou non, et de même nature ou de nature différente desdits éléments conducteurs (7a) du joint.

## Claims

1. Method of fabricating a plurality of individual liquid crystal cells, each comprising a first substrate (6) comprising a back electrode and a second active matrix substrate (5), which are assembled with a sealing frame (7) producing a cavity (8) between the two substrates for liquid crystals, the first substrates being formed collectively on a transparent support, the second substrates being formed collectively on a silicon wafer, and comprising contact pads (Pᵢ), **characterized in that**
- means of connection (20) are formed on each first substrate (6) opposite said contact pads (Pᵢ) of the second substrates;
- the second substrates are cut from the silicon wafer, along cutting lines (LVⱼ, LHᵢ) corresponding to the contour of the sealing frame (7),
- each of said second cut substrates is transferred to and assembled on the transparent support with a corresponding first substrate so that the sealing frame (7) is disposed between each first and second substrate of a cell, so as to overlap said contact pads (Pᵢ), and a portion (P'ᵢ) of the means of connection opposite, said frame comprising a seal made of insulating material and conducting elements (7a) disposed in said seal, so as to ensure electrical continuity between each pad (Pᵢ) and a corresponding element of the portion (P'ᵢ) of the means of connection, and
- a subsequent step of separation into individual liquid crystal cells by cutting the glass support is performed so that the zone of each first substrate comprising the means of connection is overhanging (D) with respect to the second substrate to which it is assembled.

2. Method of fabrication according to Claim 1, **characterized in that** it comprises a subsequent step of filling the cavities (8) with liquid crystals.

3. Method of fabrication according to Claim 1 or 2, **characterized in that** said conducting elements (7a) are conducting balls (22).

4. Method of fabrication according to Claim 1 or 2, **characterized in that** said conducting elements (7a) are resin tags (24) furnished with a conducting layer (25).

5. Method of fabrication according to Claim 1 or 2, **characterized in that** said conducting elements (7a) are metal tags (23) produced on the silicon substrate.

6. Method of fabrication according to any one of Claims 1 to 5, **characterized in that** said conducting elements (7a) are spacers.

7. Method of fabrication according to Claim 6, **characterized in that** other spacer elements (E) are disposed in the seal, said elements being conducting or otherwise, and of the same nature as or of a different nature from said conducting elements (7a).

8. Liquid crystal cell comprising a first transparent substrate (6) comprising a back electrode and a second silicon substrate (5) comprising an active matrix circuit with contact pads (Pᵢ), said substrates being assembled with a sealing frame (7) producing a cavity (8) between the two substrates for liquid crystals, so that the cell comprises means of connection (20) of the active matrix circuit that are relocated onto the first substrate (6) and are disposed overhanging (D) with respect to the second substrate (5), **characterized in that** the second substrate has a cutout (LVⱼ, LHᵢ) corresponding to the contour of the sealing frame (7), and **in that** the sealing frame (7) is formed of a seal which overlaps said contact pads (Pᵢ) on the second substrate and a portion (P'ᵢ) of said means of connection opposite, and of conducting elements (7a) disposed in the seal which ensure electrical continuity between each of said contact pads and a corresponding portion of the means of connection.

9. Cell according to Claim 8, **characterized in that** said conducting elements (7a) are conducting balls (22).

10. Cell according to Claim 8, **characterized in that** said conducting elements (7a) are resin tags (24) furnished with a conducting layer (25).

11. Cell according to Claim 8, **characterized in that** said conducting elements (7a) are metal tags (23).

12. Cell according to any one of Claims 8 to 11, **characterized in that** said conducting elements (7a) are spacers.

13. Cell according to Claim 12, **characterized in that** other spacer elements (E) are disposed in the seal, said elements being conducting or otherwise, and of the same nature as or of a different nature from said conducting elements (7a) of the seal.

## Patentansprüche

1. Herstellungsverfahren für mehrere einzelne Flüssigkristallzellen, die je ein erstes Substrat (6) mit einer Gegenelektrode und ein zweites Substrat (5) mit einer aktiven Matrix aufweisen, die durch einen Abdichtungsrahmen (7) zusammengesetzt werden, der einen Hohlraum (8) zwischen den beiden Substraten für Flüssigkristalle freilässt, wobei die ersten Substrate kollektiv auf einem transparenten Träger geformt werden, wobei die zweiten Substrate kollektiv auf einer Siliciumplatte geformt werden und Kontaktbereiche (Pᵢ) aufweisen, **dadurch gekennzeichnet, daß**
- Verbindungsmittel (20) auf jedem ersten Substrat (6) gegenüber den Kontaktbereichen (Pᵢ) der zweiten Substrate ausgebildet sind;
- die zweiten Substrate aus der Siliciumplatte entlang von Schnittlinien (LVᵢ, LHᵢ) ausgeschnitten werden, die dem Umfang des Abdichtungsrahmens (7) entsprechen;
- jedes der zweiten ausgeschnittenen Substrate auf den transparenten Träger aufgebracht und so mit einem entsprechenden ersten Substrat zusammengesetzt wird, daß der Abdichtungsrahmen (7) zwischen jedem ersten und zweiten Substrat einer Zelle angeordnet ist, um die Kontaktbereiche (Pᵢ) und einen Abschnitt (P'ᵢ) der gegenüberliegenden Verbindungsmittel zu bedecken, wobei der Rahmen eine Dichtung aus Isoliermaterial und leitende Elemente (7a) aufweist, die in der Dichtung angeordnet sind, um eine elektrische Kontinuität zwischen jedem Bereich (Pᵢ) und einem entsprechenden Element des Abschnitts (P'ᵢ) der Verbindungsmittel zu gewährleisten, und
- ein späterer Schritt der Trennung in einzelne Flüssigkristallzellen durch Ausschneiden des transparenten Trägers so durchgeführt wird, daß die Zone jedes ersten Substrats, die die Verbindungsmittel aufweist, bezüglich des zweiten Substrats, mit dem es zusammengesetzt ist, übersteht (D).

2. Herstellungsverfahren nach Anspruch 1, **dadurch gekennzeichnet, daß** es einen späteren Schritt des Füllens der Hohlräume (8) mit Flüssigkristallen aufweist.

3. Herstellungsverfahren nach Anspruch 1 oder 2, **dadurch gekennzeichnet, daß** die leitenden Elemente (7a) leitende Kugeln (22) sind.

4. Herstellungsverfahren nach Anspruch 1 oder 2, **dadurch gekennzeichnet, daß** die leitenden Elemente (7a) Harzklötzchen (24) sind, die mit einer leitenden Schicht (25) versehen sind.

5. Herstellungsverfahren nach Anspruch 1 oder 2, **dadurch gekennzeichnet, daß** die leitenden Elemente (7a) Metallklötzchen (23) sind, die auf dem Siliciumsubstrat ausgebildet sind.

6. Herstellungsverfahren nach einem der Ansprüche 1 bis 5, **dadurch gekennzeichnet, daß** die leitenden Elemente (7a) Abstandshalter sind.

7. Herstellungsverfahren nach Anspruch 6, **dadurch gekennzeichnet, daß** weitere Abstandshalterelemente (E) in der Dichtung angeordnet sind, wobei die Elemente leitend oder nicht und von gleicher oder anderer Beschaffenheit sind wie die leitenden Elemente (7a).

8. Flüssigkristallzelle mit einem ersten transparenten Substrat (6), das eine Gegenelektrode aufweist, und mit einem zweiten Siliciumsubstrat (5), das eine aktive Matrixschaltung mit Kontaktbereichen (Pᵢ) aufweist, wobei die Substrate durch einen Abdichtungsrahmen (7) zusammengesetzt werden, der einen Hohlraum (8) zwischen den beiden Substraten für Flüssigkristalle frei lässt, so daß die Zelle Verbindungsmittel (20) der aktiven Matrixschaltung seitlich auf dem ersten Substrat (6) und bezüglich des zweiten Substrats (5) überstehend (D) aufweist, **dadurch gekennzeichnet, daß** das zweite Substrat einen Ausschnitt (LVᵢ, LHᵢ) hat, der dem Umfang des Abdichtungsrahmens (7) entspricht, und daß der Abdichtungsrahmen (7) von einer Dichtung, die die Kontaktbereiche (Pᵢ) auf dem zweiten Substrat und einen Abschnitt (P'ᵢ) der gegenüberliegenden Verbindungsmittel bedeckt, und von in der Dichtung angeordneten leitenden Elementen (7a) gebildet wird, die die elektrische Kontinuität zwischen jedem der Kontaktbereiche und einem entsprechenden Abschnitt der Verbindungsmittel gewährleistet.

9. Zelle nach Anspruch 8, **dadurch gekennzeichnet, daß** die leitenden Elemente (7a) leitende Kugeln (22) sind.

10. Zelle nach Anspruch 8, **dadurch gekennzeichnet, daß** die leitenden Elemente (7a) Harzklötzchen (24) sind, die mit einer leitenden Schicht (25) versehen sind.

11. Zelle nach Anspruch 8, **dadurch gekennzeichnet, daß** die leitenden Elemente (7a) Metallklötzchen (23) sind.

12. Zelle nach einem der Ansprüche 8 bis 11, **dadurch gekennzeichnet, daß** die leitenden Elemente (7a) Abstandshalter sind.

13. Zelle nach Anspruch 12, **dadurch gekennzeichnet, daß** weitere Abstandshalterelemente (E) in der Dichtung angeordnet sind, wobei die Elemente leitend oder nicht und von gleicher oder anderer Beschaffenheit sind wie die leitenden Elemente (7a) der Dichtung.
